# FASCICULE DE BREVET EUROPEEN

(11) **EP 1 305 196 B1**
(45) Date de publication et mention de la délivrance du brevet: **13.02.2008**
(21) Numéro de dépôt: 01955408.8
(22) Date de dépôt: 12.07.2001
(51) Int. Cl.: B60T 13/52

(54) **SERVOFREIN PNEUMATIQUE ET PROCEDE DE MONTAGE**
PNEUMATISCHER BREMSKRAFTVERSTÄRKER UND MONTAGEVERFAHREN
COMPRESSED AIR BRAKE BOOSTER AND METHOD FOR MOUNTING SAME

(30) Priorité: 25.07.2000 FR 0009754
(43) Date de publication de la demande: 02.05.2003
(73) Titulaire: ROBERT BOSCH GMBH, 70442 Stuttgart (DE)
(72) Inventeur: GENDRIN, Stéphane, F-35170 Bruz (FR); FOURCADE, Jean, F-93260 les Lilas (FR); SACRISTAN, Fernando, Cabrils, 08348 Barcelona (ES); PIEL, Jean-Marc, F-93700 Drancy (FR)
(74) Mandataire: Hurwic, Aleksander Wiktor
(86) Numéro de dépôt international: PCT/FR2001/002254
(87) Numéro de publication internationale: WO 2002/008037

(56) Documents cités:
- EP-A- 0 706 924
- DE-C- 19 729 158

## Description

La présente invention a pour objet un servofrein pneumatique ainsi que son procédé de montage. L'invention a pour but de simplifier la fabrication de tels servofreins afin de limiter leurs coûts et surtout de rendre leur constitution plus fiable.

Un servofrein pneumatique comporte dans son principe une chambre avant à volume variable séparée d'une chambre arrière également à volume variable par une cloison formée par une membrane étanche et souple et par une plaque-jupe rigide. La jupe rigide entraîne un piston pneumatique prenant appui, par l'intermédiaire d'une tige de poussée, sur un piston primaire d'un maître cylindre d'un circuit hydraulique de freinage, typiquement un maître cylindre tandem. La chambre avant, placée du côté du maître cylindre, est reliée pneumatiquement à une source de vide. La chambre arrière, opposée à la chambre avant et placée du côté d'une pédale de frein, est reliée pneumatiquement, de manière contrôlée par une valve, à une source de fluide propulseur, typiquement de l'air sous pression atmosphérique. Au repos, c'est à dire lorsqu'un conducteur n'appuie pas sur la pédale de frein, les chambres avant et arrière sont connectées entre elles alors que la chambre arrière est isolée par rapport à la pression atmosphérique. Lors du freinage, on isole tout d'abord la chambre avant par rapport à la chambre arrière, puis on admet de l'air dans la chambre arrière. Cette admission d'air a pour effet de propulser la cloison et de mettre en oeuvre l'assistance de freinage pneumatique.

Le document DE 197 29 158 C1 décrit un servomoteur pneumatique conventional.

Il est par ailleurs connu des assistances de freinage hydraulique. Typiquement un moteur électrique est relié à une pompe hydraulique qui injecte un fluide sous pression dans les circuits de freinage au moment où celui-ci est sollicité. Le contrôle de ce moteur électrique est réalisé par une mesure des pressions régnant dans les chambres avant et arrière du servofrein pneumatique. On utilise donc deux détecteurs de pression, raccordés pneumatiquement à chacune de ces chambres, pour en mesurer la pression. Ces détecteurs fournissent des signaux électriques représentatifs de ces pressions. Pour des raisons de commodité, on a choisi de placer les détecteurs de pression sur une paroi extérieure de la chambre avant, à proximité du maître cylindre. Pour mesurer la pression de la chambre avant, il suffit de ménager un trou dans la chambre avant et de placer un détecteur de pression en regard de ce trou. Pour mesurer la pression dans la chambre arrière, on a alors choisi de percer la cloison entre les chambres, et de placer dans l'orifice ainsi aménagé un conduit étanche, cheminant à l'intérieur de la chambre avant et débouchant dans un deuxième trou de celle-ci. Un deuxième détecteur de pression est placé au regard de ce deuxième trou. Le conduit est souple et permet par ailleurs le déplacement de la cloison à l'intérieur des deux chambres. Compte tenu que la cloison peut occuper des positions avancées et reculées avec une forte amplitude dans la chambre avant, on prévoit de réaliser le conduit sous la forme d'un déploiement hélicoïdal. Le pas de l'hélice ainsi constitué se réduit ou s'agrandit selon la position avancée ou reculée de la cloison dans les deux chambres.

Pour des raisons de coût et d'économie de matière notamment, on est amené à réduire les épaisseurs des parois des chambres. Il apparaît alors que du fait des mouvements de la cloison et du conduit souple une tête de prise de pression de la pression de la chambre arrière, réalisée souvent sous la forme d'une pipe coudée, est soumise à des efforts tendant à la casser ou à la désolidariser de la paroi de la chambre avant à laquelle elle est fixée. Le conduit exerce notamment sur cette tête des efforts de basculement et de flexion qui conduisent à un risque de perte d'étanchéité de la connexion de cette tête sur la paroi de la chambre avant.

En outre, un deuxième problème est rencontré par la présence des deux détecteurs. Le coût engendré par une telle réalisation, coût de fabrication et coût de mise en place pénalise économiquement cette solution.

Dans l'invention pour remédier à ces problèmes on prévoit de réaliser la tête de prise de pression de manière à réduire notablement un hyperstatisme de fixation qui forme un obstacle sans tolérance aux efforts exercés par le conduit souple au moment du déplacement de la cloison. Dans la pratique, dans l'invention on sépare les fonctions d'étanchéité et de maintien mécanique de la tête de prise de pression avec un socle de détecteur monté rigidement sur la paroi de la chambre avant. En pratique la tête de prise de pression comporte un tube de prélèvement, maintenu de manière étanche par sa base au socle. Cette base est par ailleurs maintenue mécaniquement au contact du socle par l'intermédiaire d'une collerette prenant appui sur un rebord d'un orifice ménagé dans une cage formant chape. En pratique, le tube peut ainsi accepter de légers déplacements dans l'orifice, tant latéralement qu'en profondeur. Sans aller jusqu'à ce que le tube de prélèvement soit mobile, il accepte de légers déplacements dans des conditions telles que, quelle que soit sa position, au cours de ces déplacements l'étanchéité de la connexion soit maintenue.

Bien entendu, on se sert de préférence de cette solution pour réaliser un double détecteur. En pratique, la cage est perforée, latéralement ou par sa base, de façon à communiquer avec le volume de la chambre avant. On réalise alors de préférence un seul trou dans cette chambre avant. Le tube de prélèvement passe dans ce trou avec un jeu suffisant pour délimiter deux espaces à l'endroit du trou : un espace intérieur au tube (relié par ailleurs par le conduit souple à la chambre arrière), et un espace périphérique au tube relié à la chambre avant par un trou dans la cage. Les deux passages sont de préférence concentriques.

En agissant ainsi on obtient le résultat suivant que le tube de prélèvement est mécaniquement maintenu, tolère des efforts par de faibles déplacements, et maintien l'étanchéité par un joint étanche qui reste étanche pour toute position du tube au cours de ses déplacements.

L'invention a donc pour objet un servofrein pneumatique comportant une chambre avant connectable à une source de vide, une chambre arrière connectable à une arrivée haute pression, une cloison mobile étanche entre les deux chambres, un équipage mobile emporté avec la cloison mobile et relié. à un circuit hydraulique de freinage, un dispositif pour admettre un fluide haute pression dans la chambre arrière au moment d'un freinage, un orifice dans une paroi de la chambre avant, et un détecteur placé en regard de l'orifice pour mesurer des pressions régnant dans au moins une des deux chambres, caractérisé en ce que ce détecteur comporte un socle et un tube de prélèvement, le socle étant relié par une liaison mécanique rigide unique à la paroi de la chambre avant, le tube de prélèvement étant fixé de manière étanche par sa base au socle, ce tube comportant une collerette, une cage formant chape étant fixée à la paroi de la chambre avant, la collerette étant en appui contre un rebord d'un orifice ménagé dans la cage.

L'invention a également pour objet un procédé de montage d'un servofrein pneumatique dans lequel
- on réalise une chambre avant connectable à une source de vide,
- on insère un tube de prélèvement dans un orifice d'une cage en forme de chape, une collerette du tube de prélèvement venant en appui contre un bord de l'orifice,
- on fixe la cage à une paroi intérieure de la chambre avant en regard d'un trou de cette chambre avant, cette paroi comportant ce trou en regard de cet orifice,
- on insère dans le trou, de manière à venir autour du tube, un joint de chambre avant et, dans ce joint de chambre avant, un embout d'un socle d'un détecteur monobloc pour mesurer des pressions.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
Figure 1 : une représentation schématique d'un servofrein pneumatique dans lequel est mise en oeuvre l'invention ;
Figures 2a et 2b : des représentations en coupe, respectivement, d'un détecteur monobloc et d'une collerette d'un tube de prélèvement de ce détecteur selon une direction AA de la figure 2a.

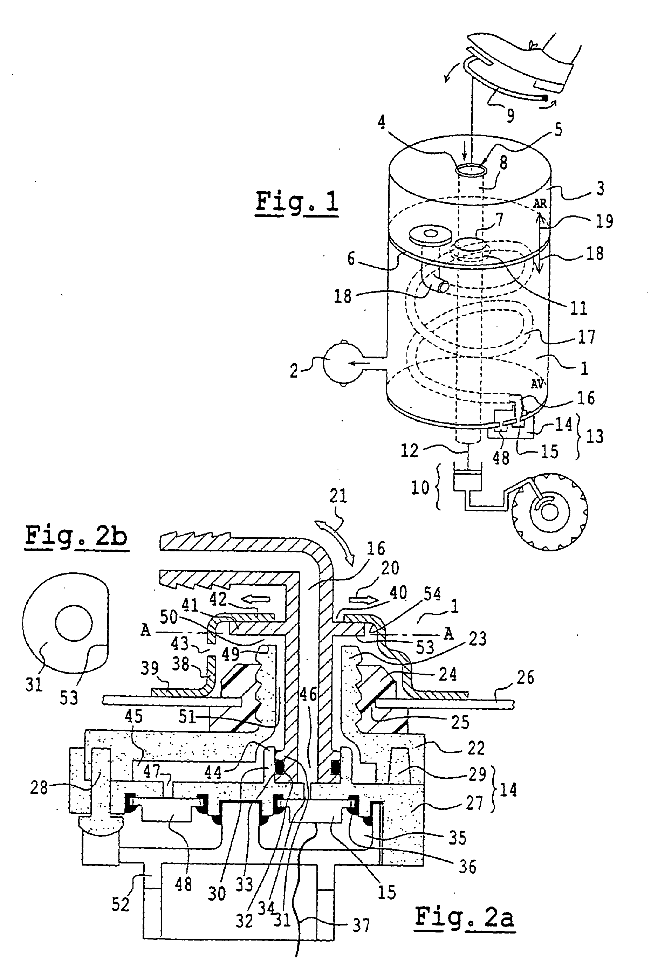

La Figure 1 montre un servofrein pneumatique comportant une chambre avant 1 connectable à une source 2 de vide, une pompe à dépression par exemple. Typiquement la pompe 2 peut être constituée par une prise des gaz d'admission d'un moteur d'un véhicule. Dans le cas d'un moteur diesel on utilise une pompe à vide. Le servofrein comporte également une chambre arrière 3 connectable, par exemple par une valve schématique 4 à une arrivée 5 haute pression : typiquement l'air ambiant. Le servofrein comporte par ailleurs une cloison mobile 6 munie habituellement d'une jupe rigide et d'une membrane étanche. La membrane empêche la communication pneumatique entre les deux chambres. La cloison 6 est percée d'un orifice étanche 7 pour laisser passer un équipage mobile 8. L'équipage 8 est relié mécaniquement d'une part à une pédale de frein 9 et d'autre part à un circuit 10 hydraulique de freinage. Le principe de l'assistance procuré par un tel servofrein est le suivant. Sous l'action de la pédale 9, l'équipage mobile 8 plonge dans la chambre arrière dégageant la valve 4 par laquelle l'air ambiant s'introduit dans la chambre arrière 3. L'air ambiant exerce alors une pression sur la cloison 6 qui entraîne, par l'intermédiaire d'un appui 11 solidaire de l'équipage mobile 8, l'équipage mobile 8 de manière à ce qu'une extrémité 12 de ce dernier actionne le circuit hydraulique de freinage 10.

Le servofrein comporte un détecteur 13 pour mesurer des pressions régnant dans au moins une des deux chambres, et de préférence dans les deux. Le détecteur 13 comporte ainsi un socle 14 maintenant un premier capteur 15 disposé en regard d'un tube de prélèvement 16. Le tube de prélèvement 16, dans un exemple préféré, est relié d'une manière étanche à la chambre arrière 3 par un conduit souple hélicoïdal 17 lui-même débouchant dans la chambre arrière 3 par l'intermédiaire d'une pipe 18. Le tube 16 pourrait toutefois n'être qu'un tube prélevant la pression fluide à l'intérieur de la chambre avant 1.

La figure 2a permet de représenter plus en détail le détecteur monobloc 13. Elle permet notamment de montrer en quoi la réalisation de l'invention permet de résoudre un problème de tenue aux efforts exercés par le conduit souple 17 lorsque la cloison 6, du fait des différentes utilisations, se déplace dans les chambres 1 et 3 selon les flèches 20 et 21. Le montage ainsi réalisé est un montage apte à conférer une tenue mécanique sans fatigue au cours du temps de façon à ce que le servofrein, de ce point de vue, puisse servir plus d'une dizaine d'années. Du fait des efforts exercés par le conduit 17, le tube 16 est soumis à des contraintes latérales 20 ou à des contraintes de basculement 21. Le tube 16 en forme de pipe est de préférence réalisé en matière plastique, par exemple en PVC ou en ABS.

Pour assurer alors l'étanchéité de la connexion pneumatique, le socle 14 maintient le tube 16 avec une certaine aisance correspondant à des déplacements selon les flèches 20 et 21. Le socle 14 comporte à cet effet une embase 22 munie d'un embout 23 fixé par l'intermédiaire d'un joint étanche 24 dans un orifice 25 d'une paroi 26 de la chambre avant 1. Pour obtenir une telle fixation presque rigide et étanche, le joint 24 est lisse. Par contre sa forme s'adapte à celle des encoches en forme de branches de sapin de l'embout 23. Le joint 24 prend par ailleurs appui sur le rebord de l'orifice 25 de la paroi 26 par des lèvres qui s'appliquent sur la paroi 26.

Le socle 14 comporte, fixé contre l'embase 22, un couvercle 27. Le couvercle 27 est solidairement fixé à l'embase 22, par exemple par l'intermédiaire de rivets ou de vis 28 et 29. Le couvercle 27 comporte par ailleurs une tour 30 ronde s'élevant perpendiculaire au couvercle 27, en direction de l'embout 23. Dans un exemple préféré de réalisation, le diamètre intérieur de la tour est égal au diamètre intérieur de l'embout creux 23 lui-même égal au diamètre extérieur maximum du tube 16. Ce diamètre extérieur maximum du tube 16 est par exemple présent à l'endroit d'une base 31 du tube du prélèvement 16. Cette base 31 possède en particulier une rainure, ici une rainure extérieure, circulaire 32 dans laquelle est placé un joint torique 33. La tour est ici présentée à l'extérieur du tube 16. Il serait toutefois possible de présenter la tour à l'intérieur du tube 16. Le joint 33 appuyant ici d'une part contre la paroi intérieure de la tour 30 et d'autre part contre le fond de la rainure 32 du tube 16 réalise une étanchéité pneumatique de la connexion du tube 16 au couvercle 27, et donc au socle 14. Du fait de sa réalisation à la base du tube 16, la connexion étanche supporte des efforts de basculement. A cet effet la partie du tube 16 qui possède un plus grand diamètre que le reste du tube est limitée en hauteur. La hauteur de la tour 30 est par ailleurs de nature à autoriser un léger coulissement vertical. Il serait par ailleurs possible de remplacer le joint torique 33 par un joint de colle étanche par exemple en silicone ou caoutchouc.

Dans le couvercle 27 en regard du tube 16 est ménagé un trou 34 qui débouche dans un réceptacle 35 dans lequel est placé le détecteur de pression 15. Ce détecteur 15 est par exemple maintenu dans le réceptacle 35 par l'intermédiaire d'un joint étanche 36 situé à sa périphérie au contact du couvercle 27. Le joint 36 est un joint fixe. Le détecteur 15 produit un signal utilisable et transmis par une connexion électrique 37 pour commander le circuit hydraulique 10.

La base du tube 16 repose ainsi, sur les rebords de l'orifice 34, au contact du couvercle 27 du socle 14. Une cage 38 est par ailleurs fixée à la paroi 26. Par exemple la fixation de la cage 38, en tôle, peut être soudée par points à la paroi 26 en tôle également. La fixation de la cage 38 à la paroi 26 est rigide. La cage 38 a globalement une forme de vasque reposant par ses ailes 39 contre la paroi 26. La cage 38 comporte un orifice 40 au travers duquel passe le tube 16. A l'endroit de l'orifice 40, le tube 16 possède une collerette 41 prenant appui contre un rebord 42 de la cage 38. Dans ces conditions le tube 16 est maintenu selon son grand axe en réaction d'une part par la collerette 41 contre le rebord 42 et d'autre part par sa base contre les rebords du trou 34. La cage 38 joue un rôle de chape. L'orifice 40 est plus grand que la dimension extérieure du tube 16 de manière à autoriser des débattements selon le sens des contraintes 20 et 21. De ce fait, lorsque la cloison 6 s'abaisse ou s'élève dans les deux chambres 1 et 3, le conduit 17 exerce sur le tube de prélèvement 16 des efforts qui ne tendent ni à le briser ni à faire perdre l'étanchéité de la liaison pneumatique 33.

Comme indiqué précédemment, de préférence le détecteur est un double détecteur et permet, d'une manière monobloc, de mesurer les pressions dans les deux chambres tout en réalisant un seul orifice 25 dans la paroi 26. Dans ce but la cage 38 formant chape est munie d'un orifice 43 par lequel la pression dans la chambre avant 1 s'établit également à l'intérieur de la cage 38. A la périphérie du tube 16, dans l'embout 23 cette pression de la chambre à vide 1 s'établit également. La tour 30 est telle que son sommet 44 ne vient pas au contact de l'embase 22, de manière à faire communiquer une chambre isolée 45 réalisée dans le socle 14 avec la chambre avant 1. La chambre 45 est ainsi isolée d'une chambre 46 formée à la base du tube 16. La chambre 45 est placée en regard d'un autre trou 47 réalisé dans le couvercle 27. En face du trou 47 est placé un deuxième détecteur 48 du même type que le détecteur 15. Le détecteur 48 mesure dans ces conditions la pression régnant dans la chambre à vide 1. En agissant ainsi, avec un seul détecteur monobloc 14, et un seul orifice 25, on peut effectuer les deux mesures. La fabrication et la mise en place d'un détecteur monobloc unique sont plus pratiques et moins onéreuses que la mise en place de deux détecteurs séparés. Elle conduit à augmenter la fiabilité du servofrein.

Le principe de montage de cet ensemble est le suivant. On place le tube de prélèvement 16 dans la cage 38 de façon à ce qu'il passe par l'orifice 40 de cette dernière avec sa collerette 41 en appui. Puis on fixe la cage 38, avec le tube 16 qui ballotte, à la paroi 26. Après ou avant cette fixation, on place le joint 24 dans l'orifice 25 et on y engage l'embase 22. Cette solution est rendue possible parce que le diamètre extérieur de la base du tube 16 est au plus égal au diamètre intérieur de l'embout 23 de l'embase 22. La dimension de l'embout 23 est calculée de telle façon que l'extrémité 49 de ce dernier ne vienne pas en butée contre la collerette 41 mais laisse un jeu 50 utilisable pour tolérer les mouvements 20 et 21 et pour conduire ensuite le fluide de la chambre 1 dans le volume périphérique concentrique 51 du tube 16. Ceci étant réalisé, on place le couvercle 27 sur l'embase 22 sans oublier de placer le joint torique 33 sur le tube 16. En variante le joint torique pourrait être placé dans une rainure de la tour 30. Le couvercle 27 peut être préalablement muni des détecteurs 15 et 48 avant sa mise en place sur l'embase 22. Les réceptacles dans le couvercle 27 de réception des détecteurs 15 et 48 peuvent être par ailleurs masqués par un capot 52 de protection.

De préférence, figure 2b, la collerette 41 possédera une forme de détrompage, par exemple un simple méplat 53. Ce méplat 53 est destiné à venir s'encastrer, au moins approximativement, dans une réservation 54 de la cage 38. En effet, si la collerette avait été ronde, le tube 16 en forme de pipe aurait pu tourner sur lui-même d'un tour entier. De manière à ne pas user par frottement le joint 33, on limite ses déplacements en rotation à ceux strictement nécessaires du fait de la souplesse du conduit 17. En pratique le méplat 53 n'est pas totalement en appui contre le rebord 54, de sorte que la pipe 16 peut tourner sur elle-même de quelques degrés.

## Revendications

1. - Servofrein pneumatique comportant une chambre avant (1) connectable à une source (2) de vide, une chambre arrière (3) connectable à une arrivée (5) haute pression, une cloison mobile (6) étanche entre les deux chambres, un équipage mobile (8) emporté avec la cloison mobile et relié à un circuit (10) hydraulique de freinage, un dispositif (4) pour admettre un fluide haute pression dans la chambre arrière au moment d'un freinage, un orifice (25) dans une paroi (26) de la chambre avant et un détecteur (15) placé en regard de l'orifice pour mesurer des pressions régnant dans au moins une des deux chambres, **caractérisé en ce que** ce détecteur comporte un socle (14) et un tube (16) de prélèvement, le socle étant relié par une liaison mécanique rigide unique à la paroi (26) de la chambre avant, le tube de prélèvement étant fixé de manière étanche (33) par sa base (31) au socle, ce tube comportant une collerette (41), une cage (38) formant chape étant fixée à la paroi de la chambre avant, la collerette étant en appui contre un rebord d'un orifice (40) ménagé dans la cage.

2. - Servofrein selon la revendication 1, **caractérisé en ce que** la collerette comporte une forme (53) de détrompage pour orienter son appui (54) dans l'orifice.

3. - Servofrein selon l'une des revendications 1 à 2, **caractérisé en ce que** la fixation étanche du tube sur le socle est réalisée par un joint torique (33), de préférence logé dans une rainure circulaire (32) du tube et en appui contre une paroi cylindrique circulaire (30) du socle.

4. - Servofrein selon l'une des revendications 1 à 3, **caractérisé en ce que** la cage comporte un orifice (43) pour communiquer avec la chambre avant.

5. - Servofrein selon l'une des revendications 1 à 4, **caractérisé en ce que** le détecteur est un double (15,48) détecteur monobloc de pression, le socle comportant deux chambres (45,46) isolées communiquant chacune avec un détecteur de pression, une première chambre isolée étant en regard d'un passage (34) correspondant à l'intérieur du tube, une autre chambre isolée étant en regard d'un passage (47) correspondant à un volume extérieur (51) au volume intérieur du tube.

6. - Servofrein selon la revendication 5, **caractérisé en ce que** le volume extérieur comporte une partie concentrique au tube.

7. - Servofrein selon l'une des revendications 1 à 6, **caractérisé en ce que** le tube comporte une pipe reliée à un conduit (17) flexible hélicoïdal.

8. - Servofrein selon l'une des revendications 1 à 7, **caractérisé en ce que** le socle est relié à la paroi par un joint (24) à sapins étanche.

9. - Procédé de montage d'un servofrein pneumatique dans lequel
- on réalise une chambre avant (1) connectable à une source (2) de vide,
- on insère un tube (16) de prélèvement dans un orifice (40) d'une cage (38) en forme de chape, une collerette (41) du tube de prélèvement venant en appui contre un bord de l'orifice,
- on fixe la cage à une paroi intérieure de la chambre avant en regard d'un trou (25) de cette chambre avant, cette paroi comportant ce trou en regard de cet orifice,
- on insère dans le trou, de manière à venir autour du tube, un joint (24) de chambre avant et, dans ce joint de chambre avant, un embout (23) d'une embase (22) d'un détecte (13) monobloc pour mesurer des pressions

10. - Procédé selon la revendication 9, **caractérisé en ce que**
- on raccorde le tube de prélèvement à un couvercle (27) du socle par l'intermédiaire d'un joint torique étanche (33).

## Claims

1. Pneumatic servobrake, comprising a front chamber (1), capable of being connected to a vacuum source (2), a rear chamber (3), which can be connected to a high-pressure supply inlet (5), a moving tight partition wall (6) between said chambers, a moving set (8) carried along by the partition wall and connected to a hydraulic braking circuit (10), a device (4) provided for the supply of the rear chamber with a high-pressure fluid at the time of a braking operation, an opening (25) in a wall (26) of the front chamber, and a detector (15) opposite such opening, for the measurement of the pressure in at least one of the chambers, **characterised in that** said detector comprises a baseplate (14) and a sample tube (16), the baseplate being connected, by means of a single rigid link, to the wall (26) of the front chamber, whereas the sample tube is fastened, in a fluidproof manner (33), by its lower part (31) to the baseplate, said tube comprising a collar (41), and a yoke-forming cage (38) being fastened to the wall of the front chamber, and the collar resting on a shoulder-forming edge of an opening (40) made in the cage.

2. Servobrake according to claim 1, **characterised in that** the collar has a contoured shape (53) for a directional bearing on a recess-forming margin (54) of the opening (40).

3. Servobrake according to claim 1 or 2, **characterised in that** the leakproof attachment of the sample tube to the baseplate is achieved using a O ring (33), preferably fitted in a circular groove (32) in the tube, and resting on a circular cylindrical wall (30) of the baseplate.

4. Servobrake according to any one of claims 1 to 3, **characterised in that** the cage comprises a port (43) for a communication with the front chamber.

5. Servobrake according to any one of claims 1 to 4, **characterised in that** said detector is a one-piece pressure detector comprising two sensors (15, 48), the baseplate having two separate chambers (45, 46), each of them communicating with a pressure sensor, a first isolated chamber being situated opposite a passage (34) connected with the inside of the sample tube, while the other isolated chamber faces a passage (47) which is connected with a space (51), which is located on the outside of the sample tube.

6. Servobrake according to claim 5, **characterised in that** the outer space comprises a portion, which is concentric with the tube.

7. Servobrake according to any one of claims 1 to 6, **characterised in that** the tube comprises an elbow pipe connected to a helical flexible hose (17).

8. Servobrake according to any one of claim 1 to 7, **characterised in that** the baseplate is connected to the wall by means of a leakproof joint (24) intended for a fir-branch type connection.

9. Assembling process for a pneumatic servobrake, wherein :
- a front chamber (1) is provided, which is capable of being connected to a vacuum source (2) ;
- a sample tube (16) is inserted through an opening (40) made in a yoke-shaped cage (38), a collar (41) of the sample tube resting on a shoulder-forming edge of the opening ;
- the cage is fastened to an inner wall of the front chamber, opposite a hole (25) in the front chamber, said wall having such hole opposite said opening ;
- a joint (24) for the front chamber is inserted into the hole, so as to fit around the sample tube, and then an adapter (23) of a baseplate (22) of a one-piece detector (13), intended for the measurement of pressures, is inserted into said joint.

10. Process according to claim 9, **characterised in that** :
- the sample tube is connected to a cover (27) of the baseplate through a tight O ring (33).

## Patentansprüche

1. Pneumatische Servobremse mit einer vorderen Kammer (1), die an eine Vakuumquelle (2) angeschlossen werden kann, einer hinteren Kammer (3), die an eine Hochdruckzuführung (5) angeschlossen werden kann, einer dichten beweglichen Trennwand (6) zwischen den beiden Kammern, einer beweglichen Gruppe (8), die mit der beweglichen Trennwand mitgenommen wird und mit einem hydraulischen Bremskreis (10) verbunden ist, einer Vorrichtung (4), um bei einer Bremsung das Einströmen eines Hochdruckfluids in die hintere Kammer zu gestatten, einer Öffnung (25) in einer Wand (26) der vorderen Kammer und einer Erfassungseinrichtung (15), die gegenüber der Öffnung angeordnet ist, um Drücke zu messen, die in mindestens einer der beiden Kammern herrschen, **dadurch gekennzeichnet, dass** diese Erfassungseinrichtung einen Sockel (14) und ein Entnahmerohr (16) aufweist, wobei der Sockel über eine einzige starre mechanische Verbindung mit der Wand (26) der vorderen Kammer verbunden ist, das Entnahmerohr über seinen Fuß (31) in dichter Weise (33) am Sockel befestigt ist, dieses Rohr einen Kragen (41) aufweist, ein eine Abdeckung bildender Halter (38) an der Wand der vorderen Kammer befestigt ist und der Kragen an einem Rand einer im Halter ausgebildeten Öffnung (40) anliegt.

2. Servobremse nach Anspruch 1, **dadurch gekennzeichnet, dass** der Kragen eine Unverwechselbarkeitsform (53) aufweist, um seine Auflage (54) in die Öffnung zu orientieren.

3. Servobremse nach Anspruch 1 oder 2, **dadurch gekennzeichnet, dass** die dichte Befestigung des Rohrs am Sockel mittels einer torischen Dichtung (33) realisiert ist, die vorzugsweise in einer kreisförmigen Nut (32) des Rohrs angeordnet ist und an einer zylindrischen, kreisförmigen Wand (30) des Sockels anliegt.

4. Servobremse nach einem der Ansprüche 1 bis 3, **dadurch gekennzeichnet, dass** der Halter eine Öffnung (43) für eine Verbindung mit der vorderen Kammer aufweist.

5. Servobremse nach einem der Ansprüche 1 bis 4, **dadurch gekennzeichnet, dass** die Erfassungseinrichtung eine einstückige Doppel-Druckerfassungseinrichtung (15, 48) ist, wobei der Sockel zwei getrennte Kammern (45, 46) aufweist, die jeweils mit einer Druckerfassungseinrichtung verbunden sind, wobei eine erste getrennte Kammer gegenüber einem Durchgang (34) liegt, der dem Rohrinneren entspricht, und eine weitere getrennte Kammer gegenüber einem Durchgang (47) liegt, der einem Volumen (51) entspricht, das sich außerhalb des Innenvolumens des Rohrs befindet.

6. Servobremse nach Anspruch 5, **dadurch gekennzeichnet, dass** das Außenvolumen einen zum Rohr konzentrischen Abschnitt aufweist.

7. Servobremse nach einem der Ansprüche 1 bis 6, **dadurch gekennzeichnet, dass** das Rohr einen mit einer flexiblen spiralförmigen Leitung (17) verbundenen Stutzen aufweist.

8. Servobremse nach einem der Ansprüche 1 bis 7, **dadurch gekennzeichnet, dass** der Sockel über eine Tannendichtung (24) mit der Wand verbunden ist.

9. Verfahren zur Montage einer pneumatischen Servobremse, bei dem
- eine vordere Kammer (1) ausgebildet wird, die an eine Vakuumquelle (2) angeschlossen werden kann,
- ein Entnahmerohr (16) in eine Öffnung (40) eines Halters (38) in Form einer Abdeckung eingesetzt wird, wobei ein Kragen (41) des Entnahmerohrs an einen Rand der Öffnung in Anlage gelangt,
- der Halter an einer Innenwand der vorderen Kammer gegenüber einem Loch (25) dieser vorderen Kammer befestigt wird, wobei diese Wand dieses Loch gegenüber dieser Öffnung aufweist,
- eine Dichtung (24) für die vordere Kammer so in das Loch eingesetzt wird, dass sie das Rohr umgibt, und ein Ansatzstück (23) eines Basisteils (22) einer einstückigen Erfassungseinrichtung (13) in diese Dichtung für die vordere Kammer eingesetzt wird, um Drücke zu messen.

10. Verfahren nach Anspruch 9, **dadurch gekennzeichnet, dass**
- das Entnahmerohr mittels einer torischen Dichtung (33) mit einem Deckel (27) des Sockels verbunden wird.
